# FASCICULE DE BREVET EUROPEEN

(11) **EP 1 077 522 B1**
(45) Date de publication et mention de la délivrance du brevet: **02.02.2005**
(21) Numéro de dépôt: 99115758.7
(22) Date de dépôt: 10.08.1999
(51) Int. Cl.: H02K 7/116, H02K 9/19

(54) **Dispositif d'entraînement comportant un moteur électrique refroidi par liquide et un engrenage planétaire**
Antriebsvorrichtung mit einem flüssigkeitsgekühlten elektrischen Motor und Planetengetriebe
Drive apparatus comprising a liquid-cooled electric motor and a planetary gear

(43) Date de publication de la demande: 21.02.2001
(73) Titulaire: The Swatch Group Management Services AG, 2501 Biel (CH)
(72) Inventeur: Arbanas, Viktor, 5400 Baden (CH); Zysset, Ernst, 2532 Macolin (CH)
(74) Mandataire: Laurent, Jean

(56) Documents cités:
- EP-A- 0 660 492
- EP-A- 0 785 612
- DE-A- 19 732 637
- US-A- 5 127 485

## Description

La présente invention concerne un dispositif d'entraînement du genre comprenant un moteur électrique et un engrenage planétaire pourvu d'un arbre d'entrée entraîné par ledit moteur et d'un arbre de sortie, le dispositif étant pourvu d'un circuit de refroidissement dudit moteur comportant une pompe assurant la circulation d'un liquide dans ledit circuit, l'engrenage planétaire comportant trois éléments principaux, à savoir : un pignon planétaire, un porte-satellites muni de plusieurs pignons satellites et une couronne à denture intérieure en prise avec lesdits pignons satellites, l'un de ces trois éléments principaux étant relié à l'arbre d'entrée, un autre élément étant relié à l'arbre de sortie et le troisième servant d'élément de réaction.

La chaleur produite par le moteur électrique doit être évacuée pour éviter les risques de surchauffe de celui-ci. Dans l'art antérieur, ce refroidissement peut être assuré par un circuit de refroidissement passant à travers le moteur électrique et dans lequel on fait circuler un liquide de refroidissement grâce à une pompe située à l'extérieur dudit moteur électrique. Toutefois, un tel dispositif est encombrant parce qu'il nécessite une transmission mécanique entre le moteur et la pompe, ainsi que des conduits pour le liquide entre ces deux éléments et un radiateur où le liquide se refroidit.

Dans les demandes de brevet EP 785 612 et EP 660 492, il est prévu de refroidir un moteur électrique au moyen de l'huile d'une transmission à engrenage couplée directement à l'arbre du moteur, cette huile étant introduite dans l'arbre creux du moteur à partir de la transmission. Toutefois, ces dispositifs ont une efficacité limitée car ils ne refroidissent que le rotor du moteur.

Dans le brevet US 5 127 485, il est décrit un dispositif d'entraînement du genre indiqué en préambule, sous la forme d'une unité compacte entraînant une seule roue d'un véhicule tel qu'une voiture de golf. La partie inférieure du carter commun au moteur électrique et à l'engrenage planétaire contient de l'huile qui est pompée par une pompe à huile entraînée par un moteur électrique distinct, commandé en fonction de la température du moteur principal ou du courant traversant celui-ci, afin de refroidir ce moteur en s'écoulant sur les enroulements de son stator et sur son rotor après avoir traversé un radiateur de refroidissement incorporé au carter. Comme ce système de refroidissement nécessite un moteur additionnel pour entraîner la pompe et une unité de commande particulière pour commander ce moteur, il peut être sujet à des pannes et ne garantit donc pas un refroidissement suffisant dans toutes les circonstances. En outre, la nécessité de prévoir un logement spécial pour la pompe et son propre moteur, notamment avec une chambre étanche pour ce dernier, complique la construction.

L'invention a donc pour but de résoudre les inconvénients de l'art antérieur et de refroidir le moteur électrique à l'aide d'un dispositif particulièrement simple et compact.

Ce but est atteint à l'aide d'un dispositif d'entraînement du genre indiqué plus haut, caractérisé en ce que la pompe est une pompe volumétrique entraînée par rotation de l'élément de réaction de l'engrenage planétaire.

Ainsi, on utilise pour entraîner la pompe un organe mécanique déjà présent dans le dispositif d'entraînement, ce qui simplifie la construction dans tous les cas. De plus, la pompe peut avantageusement être placée dans le même carter que l'engrenage planétaire, ce qui évite des conduits de liaison.

De préférence, l'élément de réaction est la couronne de l'engrenage planétaire et celle-ci constitue au moins une partie du rotor de ladite pompe.

De préférence, le circuit de refroidissement est pourvu d'au moins une soupape réglable, par exemple une soupape de limitation de débit, commandée par une unité électronique de commande. Ainsi, il est possible d'ajuster automatiquement le refroidissement du moteur en fonction des besoins en régulant le débit de liquide de refroidissement fourni par la pompe.

De plus, le refroidissement du moteur est possible même lorsque l'arbre de sortie est à l'arrêt. En effet, dans ce cas, on peut faire tourner le moteur en laissant tourner l'élément de réaction, ce qui fait circuler le liquide de refroidissement.

Enfin, selon une variante de réalisation de l'invention, la pompe, la soupape réglable et l'unité électronique de commande constituent des moyens de régulation agissant sur l'élément de réaction pour réguler la vitesse et/ou le couple de l'arbre de sortie.

L'invention sera mieux comprise à la lecture de la description suivante d'un mode de réalisation préféré de l'invention, présenté à titre illustratif et non limitatif en faisant référence aux dessins joints, dans lesquels :
- la figure 1 est une vue en coupe radiale d'un dispositif selon l'invention, comprenant un moteur électrique, un engrenage planétaire et un circuit hydraulique passant dans ces deux composants, la figure étant constituée de deux demi-coupes suivant la ligne A1-A1 de la figure 2 et la ligne A2-A2 de la figure 3,
- la figure 2 est une vue en coupe longitudinale suivant la ligne B-B de la figure 1,
- la figure 3 est une vue en coupe longitudinale de la moitié du dispositif suivant la ligne C-C de la figure 1, et
- la figure 4 est un schéma général du dispositif selon l'invention.

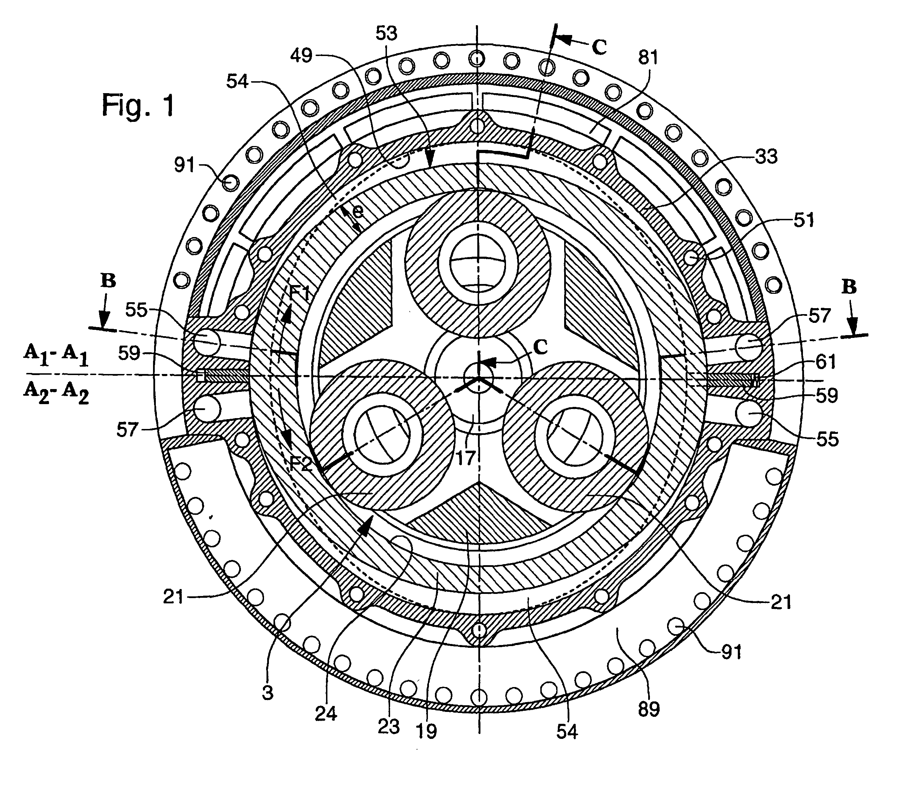

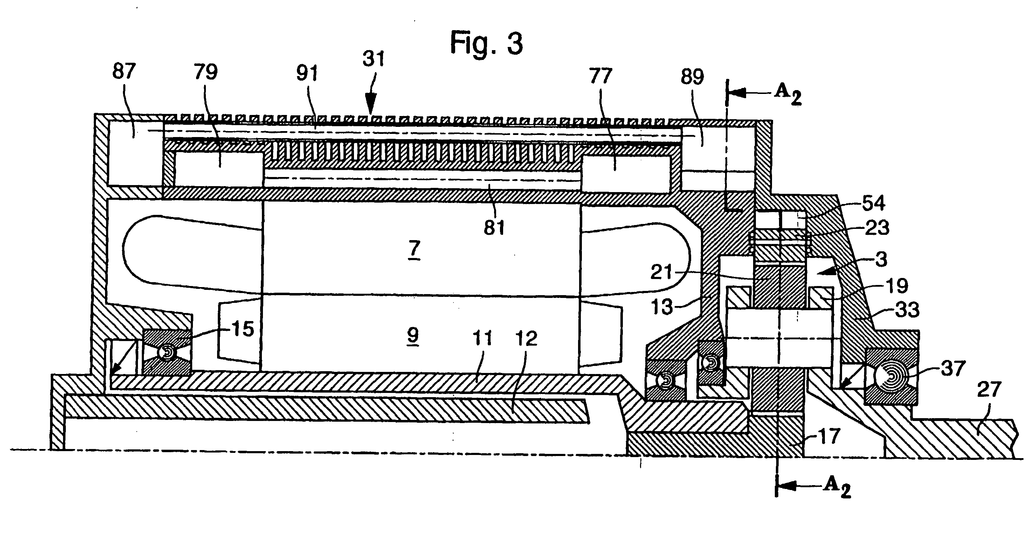

Le dispositif d'entraînement représenté dans les figures 1 à 3 comporte un moteur 1 et un engrenage planétaire 3 dans un carter commun 5 en deux pièces. Le moteur décrit ici est un moteur électrique, mais l'invention pourrait également s'adapter à un moteur à combustion interne. De façon classique, le moteur électrique 1 comporte un stator 7 et un rotor 9 pourvu d'un arbre creux 11. Celui-ci tourne autour d'un tube central fixe 12. L'ensemble de ces éléments est logé dans un bâti de moteur 13 sur lequel l'arbre 11 du rotor repose par des paliers 15. Dans la suite de la description cet arbre 11 est dit "arbre d'entrée".

De façon classique également, l'engrenage planétaire 3 se compose d'un pignon planétaire 17 central, d'un porte-satellites 19 muni de plusieurs pignons satellites 21 (trois comme cela apparaît mieux en figure 1) et d'une couronne 23 munie de dents sur sa surface interne 24. Les pignons satellites 21 sont montés sur le porte-satellites 19 grâce à des axes 25 et engrènent simultanément avec le pignon planétaire 17 et la denture de la couronne 23. Le porte-satellites 19 se prolonge par un arbre 27 dit "arbre de sortie", destiné à faire tourner un élément entraîné (non représenté sur les figures) et qui peut être un élément d'une machine ou la roue d'un véhicule, par exemple.

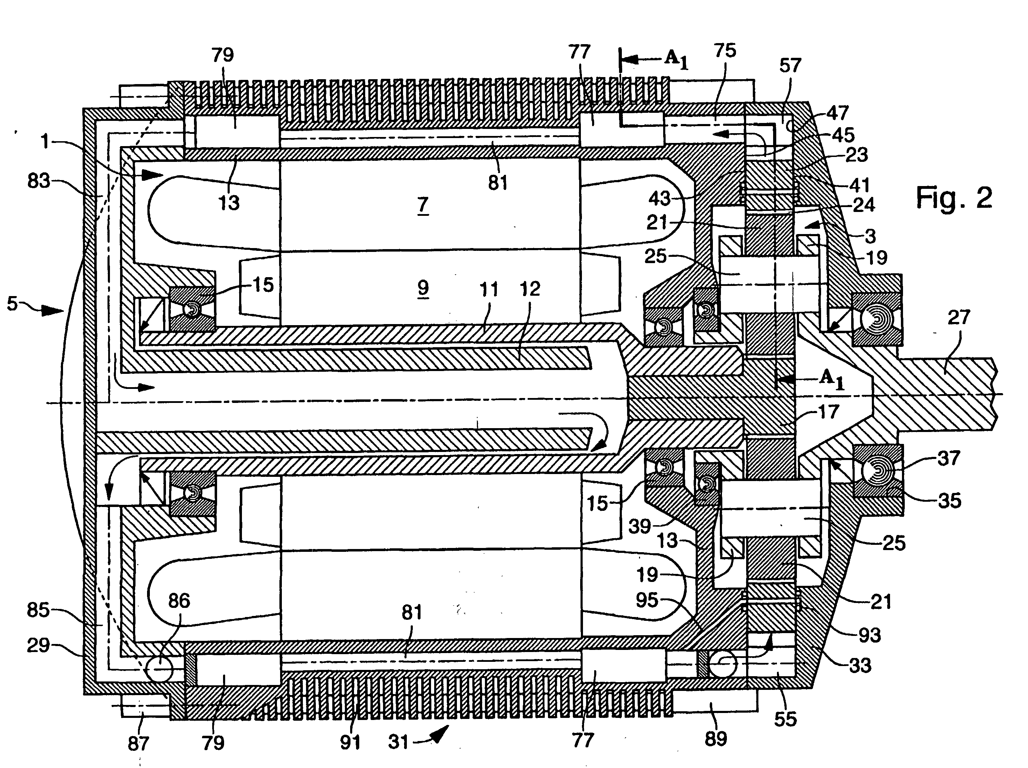

Le moteur électrique 1, son bâti 13 et l'engrenage planétaire 3 sont montés dans le carter 5 cylindrique, réalisé en plusieurs morceaux pour permettre le montage des différents éléments. Plus précisément, ce carter 5 se compose d'un fond circulaire 29 apparaissant à gauche en figure 2, d'une partie centrale annulaire 31 munie d'ailettes et constituant un radiateur et d'une partie 33 opposée au fond 29, protégeant plus particulièrement l'engrenage planétaire 3 et dénommée ci-après carter de transmission 33. Ce carter de transmission 33 présente une forme générale conique et sa partie de plus faible diamètre définit une ouverture 35 pour le passage de l'arbre de sortie 27. L'extrémité du porte-satellites 19 liée à l'arbre de sortie 27 repose sur un palier 37 logé dans cette ouverture 35. Par ailleurs, l'autre extrémité du porte-satellites repose sur un autre palier 39 reposant lui-même sur le bâti 13 du moteur électrique.

Comme illustré en figure 2, la couronne 23 présente, outre sa face interne dentée, deux faces latérales planes opposées, dites respectivement face latérale avant 41 (c'est-à-dire la face latérale visible en figure 1) et face latérale arrière 43. Par ailleurs, le bâti 13 du moteur électrique présente, dans la région située vis à vis de ladite face latérale arrière 43, une surface de contact 45 plane annulaire. De façon symétrique, le carter de transmission 33 présente dans la région située en vis à vis de la face latérale avant 41 de la couronne, une surface de contact 47 plane annulaire. Ces deux surfaces de contact 45, 47 contribuent au guidage de la couronne 23 et sont écartées entre elles d'une distance autorisant la rotation de ladite couronne, mais garantissant une bonne étanchéité avec celle-ci.

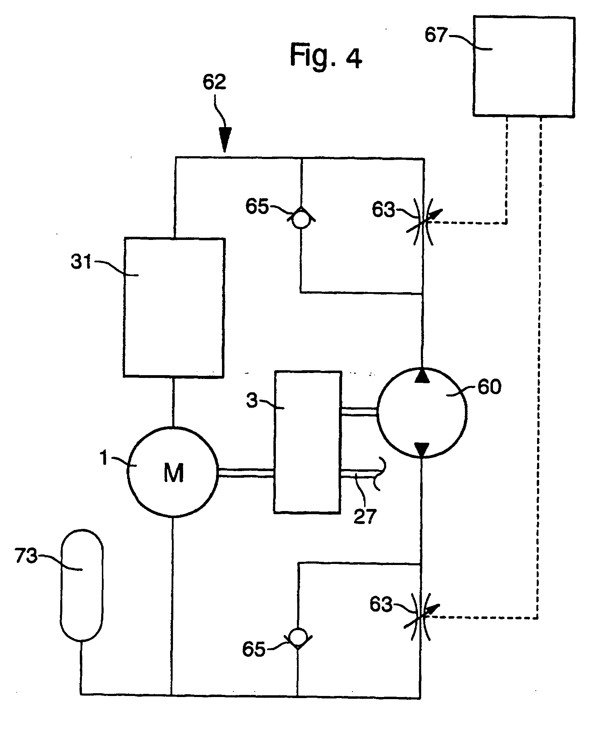

En se reportant maintenant à la figure 1, on peut voir que le carter de transmission 33 présente une surface interne 49 cylindrique et une paroi externe munie de plusieurs orifices 51 destinés à recevoir des vis le fixant au bâti 13 du moteur. La couronne 23 possède une surface extérieure 53 lisse, opposée à sa surface intérieure dentée 24. Tandis que le profil de la surface intérieure 24 est circulaire, le profil de la surface extérieure 53 est non circulaire, en l'occurrence ovale. En d'autres termes, l'épaisseur e de la couronne 23 n'est pas constante. Il en résulte deux chambres 54 symétriques et diamétralement opposées entre les surfaces 49 et 53. Ces chambres sont délimitées latéralement par les surfaces de contact 45, 47 précédemment évoquées. En direction circonférentielle, elles sont délimitées par deux segments stationnaires 59 qui coulissent radialement dans le carter 33 et sont pressés contre la surface 53 du rotor par des ressorts 61. En glissant contre ces segments, la surface 53 non circulaire fait varier le volume des chambres 54. Ainsi, selon une caractéristique importante de l'invention, la couronne 23 et le carter 33 de l'engrenage planétaire forment une pompe hydraulique volumétrique 60 (figure 4), la couronne 23 constituant le rotor de cette pompe. Selon une variante de réalisation non représentée ici, la couronne 23 peut constituer seulement une partie de ce rotor, en ce sens que l'on peut adapter sur une couronne classique (c'est-à-dire circulaire), disponible dans le commerce, deux pièces en forme de croissant pour obtenir la forme finale ovale ou analogue.

La pompe peut tourner dans les deux sens, suivant le sens du couple de réaction. Les deux chambres 54 sont reliées respectivement à des orifices d'aspiration 55 et de refoulement 57. En figure 1, la couronne 23 est censée tourner dans le sens de la flèche F1 et les orifices d'aspiration et de refoulement sont tels que représentés. Si toutefois le moteur tourne dans l'autre sens (marche arrière du véhicule), le couple de réaction fait tourner la couronne 23 dans le sens opposé (flèche F2), les orifices d'aspiration 55 deviennent alors des orifices de refoulement 57 et réciproquement, le liquide étant pompé dans l'autre sens.

Enfin, on notera que la couronne 23 constituant le rotor de la pompe n'a pas besoin d'être centrée avec précision dans le carter de l'engrenage planétaire, car les segments 59 pressés contre elle par des ressorts 61 lui permettent d'avoir un jeu radial vis-à-vis de la surface 49 du carter 33.

La structure générale du dispositif d'entraînement est décrite en faisant référence au schéma de la figure 4, où sont représentés le moteur électrique 1, l'engrenage 3 et la pompe de liquide de refroidissement 60, ainsi que le circuit 62 du liquide de refroidissement qui est avantageusement de l'eau. Ce circuit débute aux orifices de refoulement de la pompe 60 et forme une boucle fermée pour revenir aux orifices d'aspiration de cette pompe. Ce circuit est symétrique et comprend une paire de soupapes réglables de limitation de débit 63, situées chacune en aval de chaque orifice de refoulement. Une dérivation en parallèle à chaque soupape 63 comporte un clapet anti-retour 65. Ce circuit 62 est symétrique de façon à permettre la rotation de la pompe dans les deux sens. Le circuit de refroidissement traverse en outre le radiateur 31 et le moteur électrique 1 avant de retoumer à la pompe 60 en traversant le clapet anti-retour 65. En outre, le circuit peut être raccordé à un réservoir de liquide ou à un accumulateur hydraulique 73.

Les soupapes réglables 63 sont pilotées automatiquement par une unité électrique de commande 67 qui peut recevoir des signaux de capteurs indiquant par exemple les vitesses de rotation des arbres d'entrée 11 et de sortie 27, la température du moteur 1, etc. L'unité électronique 67 peut contenir un programme qui gère automatiquement le débit du liquide de refroidissement, ainsi que la pression de refoulement de la pompe et donc le couple de réaction exercé par le liquide sur l'engrenage planétaire.

Le circuit du liquide de refroidissement à travers le moteur va maintenant être décrit plus en détail en faisant référence aux figures 1 à 3.

Comme illustré sur la coupe de la figure 2, lorsque le liquide issu de l'orifice de refoulement 57 a traversé la soupape 63 représentée à la figure 4, il pénètre via un conduit 75, dans un premier canal annulaire 77 qui s'étend sur toute la périphérie du moteur, puis le liquide traverse un faisceau de conduits de refroidissement 81 du stator pour rejoindre un deuxième canal annulaire 79 semblable au canal 77, à l'autre bout du moteur. Comme illustré en figure 1, les conduits de refroidissement 81 sont disposés sensiblement sur toute la circonférence du stator. Ils peuvent présenter en coupe une forme quelconque. Ensuite, le liquide de refroidissement sort du deuxième canal annulaire 79 et pénètre via un conduit radial 83 dans le tube central 12, d'où il sort pour passer entre ce tube 12 et la surface interne de l'arbre creux du moteur, où il pénètre de la chaleur du rotor. Le liquide passe alors dans un autre conduit radial 85 et pénètre par un orifice 86 dans le radiateur 31. Celui-ci comporte un canal collecteur 87 relié à un autre canal collecteur 89 via un faisceau de tubes de refroidissement 91 traversant les ailettes du radiateur 31 sur la totalité de sa longueur. Enfin, le liquide de refroidissement sort du canal collecteur 89 pour rejoindre l'orifice d'aspiration 55. Les deux canaux 87 et 89 s'étendent chacun sur un peu moins de la moitié de la circonférence du moteur, comme on peut le voir en figure 1, où l'on voit aussi que les tubes 91 du radiateur 31 ont une section circulaire.

Il faut remarquer que le radiateur 31 pourrait être conçu différemment selon les besoins, par exemple être disposé d'un seul côté du moteur afin d'être bien exposé à un courant d'air. Ce courant d'air pourrait être produit par un ventilateur et être guidé par un capot en tôle recouvrant le radiateur.

En figure 2, on peut observer que les surfaces de contact 47, 45 respectivement du bâti de moteur 13 et du carter de transmission 33 sont munies de rainures 93. En outre, le bâti de moteur 13 présente un alésage 95 reliant les rainures 93 à l'entrée du canal annulaire 77. En effet, le liquide de refroidissement étant de préférence de l'eau, les rainures 93 permettent de récupérer les fuites d'eau qui autrement pourraient pénétrer dans l'engrenage planétaire.

## Revendications

1. Dispositif d'entraînement comprenant un moteur électrique (1) et un engrenage planétaire (3) pourvu d'un arbre d'entrée (11) entraîné par ledit moteur et d'un arbre de sortie (27), le dispositif étant pourvu d'un circuit de refroidissement (62) dudit moteur (1) comportant une pompe (60) assurant la circulation d'un liquide dans ledit circuit, l'engrenage planétaire (3) comportant trois éléments principaux, à savoir : un pignon planétaire (17), un porte-satellites (19) muni de plusieurs pignons satellites (21) et une couronne (23) à denture intérieure en prise avec les pignons satellites, l'un de ces trois éléments principaux étant relié à l'arbre d'entrée, un autre élément étant relié à l'arbre de sortie et le troisième servant d'élément de réaction, **caractérisé en ce que** la pompe est une pompe volumétrique entraînée par rotation de l'élément de réaction de l'engrenage planétaire.

2. Dispositif d'entraînement selon la revendication 1, **caractérisé en ce que** élément de réaction est la couronne (23) de l'engrenage planétaire.

3. Dispositif d'entraînement selon la revendication 2, **caractérisé en ce que** la couronne (23) constitue au moins une partie du rotor de ladite pompe.

4. Dispositif d'entraînement selon la revendication 3, **caractérisé en ce qu'**un carter (33) de l'engrenage planétaire constitue aussi le carter de ladite pompe.

5. Dispositif d'entraînement selon l'une des revendications précédentes, **caractérisé en ce que** ledit arbre d'entrée (11) est un arbre creux du rotor (9) du moteur électrique et **en ce que** le circuit de refroidissement passe à l'intérieur dudit arbre creux.

6. Dispositif d'entraînement selon l'une des revendications précédentes, **caractérisé en ce que** le circuit de refroidissement est entièrement contenu dans un carter commun (5) contenant le moteur et l'engrenage planétaire.

7. Dispositif d'entraînement selon la revendication 6, **caractérisé en ce que** ledit carter commun (5) est pourvu, sur sa périphérie, d'un radiateur (31) dans lequel passe le circuit de refroidissement.

8. Dispositif d'entraînement selon la revendication 1, **caractérisé en ce que** le moteur (1) et la pompe (60) sont agencés pour tourner dans les deux sens.

9. Dispositif d'entraînement selon l'une des revendications précédentes, **caractérisé en ce que** le circuit de refroidissement est pourvu d'au moins une soupape réglable commandée par une unité électronique de commande (67).

10. Dispositif d'entraînement selon la revendication 9, **caractérisé en ce que** ladite soupape est une soupape réglable de limitation de débit (63).

11. Dispositif d'entraînement selon la revendication 9, **caractérisé en ce que** l'unité de commande électronique (67) reçoit des signaux d'au moins un capteur choisi parmi un capteur de la vitesse de rotation de l'arbre d'entrée (11), un capteur de la vitesse de rotation de l'arbre de sortie (27) ou un capteur de la température du moteur (1).

12. Dispositif d'entraînement selon l'une des revendications 9 à 11, **caractérisé en ce que** la pompe (60), la soupape réglable (63) et l'unité électronique de commande (67) constituent des moyens de régulation agissant sur l'élément de réaction pour réguler la vitesse et/ou le couple de l'arbre de sortie (27).

## Claims

1. Driving unit including an electric motor (1) and a planetary gear (3) provided with an input shaft (11) driven by said motor and an output shaft (27), said driving unit being provided with a cooling circuit (62) for said motor (1) including a pump (60) assuring the flow of a liquid in said circuit, the planetary gear (3) including three main elements, namely: a sun wheel (17), a planet wheel carrier (19) provided with several planet wheels (21), and a ring gear (23) having an inner toothing meshed with said planet wheels, wherein one of said three main elements is connected to the input shaft, another one is connected to the output shaft and the third one acts as a reaction element, **characterised in that** the pump is a positive displacement pump driven by rotation of the reaction element of the planetary gear.

2. Driving unit according to claim 1, **characterised in that** the reaction element is the ring gear (23) of the planetary gear.

3. Driving unit according to claim 2, **characterised in that** the ring gear (23) forms at least part of the rotor of said pump.

4. Driving unit according to claim 3, **characterised in that** a casing (33) of the planetary gear also forms the casing of said pump.

5. Driving unit according to any of the preceding claims, **characterised in that** said input shaft (11) is a hollow shaft of the rotor (9) of the electric motor and **in that** the cooling circuit passes inside said hollow shaft.

6. Driving unit according to any of the preceding claims, **characterised in that** the cooling circuit is entirely contained in a common casing (5) containing the motor and the planetary gear.

7. Driving unit according to claim 6, **characterised in that** said common casing (5) is provided, on its periphery, with a radiator (31) through which the cooling circuit passes.

8. Driving unit according to claim 1, **characterised in that** the motor (1) and the pump (60) are arranged to rotate in both directions.

9. Driving unit according to any of the preceding claims, **characterised in that** the cooling circuit is provided with at least one adjustable valve controlled by an electronic control unit (67).

10. Driving unit according to claim 9, **characterised in that** said valve is an adjustable flow rate limiter valve (63).

11. Driving unit according to claim 9, **characterised in that** the electronic control unit (67) receives signals from at least one sensor selected from either a rotational speed sensor for the input shaft (11), a rotational speed sensor for the output shaft (27) or a temperature sensor for the motor (1).

12. Driving unit according to any of claims 9 to 11, **characterised in that** the pump (60), the adjustable valve (63) and the electronic control unit (67) form a regulating means acting on the reaction element to regulate the speed and/or the torque of the output shaft (27).

## Patentansprüche

1. Antriebsvorrichtung, die einen Elektromotor (1) und ein Planetengetriebe (3), das mit einer von dem Motor angetriebenen Antriebswelle (11) und mit einer Abtriebswelle (27) versehen ist, umfasst, wobei die Vorrichtung mit einem Kühlkreis (62) des Motors (1) versehen ist, der eine die Zirkulation einer Flüssigkeit in dem Kreis sicherstellende Pumpe (60) aufweist, wobei das Planetengetriebe (3) drei Hauptelemente umfasst, nämlich: ein Sonnenrad (17), einen Planetenträger (19), der mit mehreren Planetenrädern (21) versehen ist, und ein Hohlrad (23), das mit den Planetenrädern in Eingriff ist, wobei eines dieser drei Hauptelemente mit der Antriebswelle verbunden ist, ein anderes Element mit der Abtriebswelle verbunden ist und ein drittes Element als Reaktionselement dient, **dadurch gekennzeichnet, dass** die Pumpe eine Verdrängerpumpe ist, die durch die Drehung des Reaktionselements des Planetengetriebes angetrieben wird.

2. Antriebsvorrichtung nach Anspruch 1, **dadurch gekennzeichnet, dass** das Reaktionselement das Hohlrad (23) des Planetengetriebes ist.

3. Antriebsvorrichtung nach Anspruch 2, **dadurch gekennzeichnet, dass** das Hohlrad (23) wenigstens einen Teil des Rotors der Pumpe bildet.

4. Antriebsvorrichtung nach Anspruch 3, **dadurch gekennzeichnet, dass** ein Gehäuse (33) des Planetengetriebes auch das Gehäuse der Pumpe bildet.

5. Antriebsvorrichtung nach einem der vorhergehenden Ansprüche, **dadurch gekennzeichnet, dass** die Antriebswelle (11) eine Hohlwelle des Rotors (9) des Elektromotors ist und dass der Kühlkreis innerhalb der Hohlwelle verläuft.

6. Antriebsvorrichtung nach einem der vorhergehenden Ansprüche, **dadurch gekennzeichnet, dass** der Kühlkreis vollständig in einem gemeinsamen Gehäuse (5), das den Motor und das Planetengetriebe enthält, enthalten ist.

7. Antriebsvorrichtung nach Anspruch 6, **dadurch gekennzeichnet, dass** das gemeinsame Gehäuse (5) an seinem Umfang mit einem Kühlkörper versehen ist, in dem der Kühlkreis verläuft.

8. Antriebsvorrichtung nach Anspruch 1, **dadurch gekennzeichnet, dass** der Motor (1) und die Pumpe (60) so angeordnet sind, dass sie sich in den zwei Richtungen drehen.

9. Antriebsvorrichtung nach einem der vorhergehenden Ansprüche, **dadurch gekennzeichnet, dass** der Kühlkreis mit wenigstens einem einstellbaren Ventil versehen ist, das durch eine elektronische Steuereinheit (67) gesteuert wird.

10. Antriebsvorrichtung nach Anspruch 9, **dadurch gekennzeichnet, dass** das Ventil ein einstellbares Durchsatzbegrenzungsventil (63) ist.

11. Antriebsvorrichtung nach Anspruch 9, **dadurch gekennzeichnet, dass** die elektronische Steuereinheit (67) Signale von wenigstens einem Sensor empfängt, der aus einem Drehzahlsensor für die Antriebswelle (11), einem Drehzahlsensor für die Abtriebswelle (27) und einem Temperatursensor des Motors (1) ausgewählt ist.

12. Antriebsvorrichtung nach einem der Ansprüche 9 bis 11, **dadurch gekennzeichnet, dass** die Pumpe (60), das einstellbare Ventil (63) und die elektronische Steuereinheit (67) Einstellmittel bilden, die auf das Reaktionselement einwirken, um die Drehzahl und/oder das Drehmoment der Abtriebswelle (27) einzustellen.
